# EUROPEAN PATENT APPLICATION

(11) **EP 4 546 517 A1**
(43) Date of publication of application: **30.04.2025**
(21) Application number: 22951620.8
(22) Date of filing: 22.07.2022
(51) Int. Cl.: H01M 50/148, H01M 50/502

(54) **END COVER ASSEMBLY, BATTERY CELL, BATTERY AND ELECTRIC DEVICE**

(71) Applicant: Contemporary Amperex Technology Co., Limited, Ningde, Fujian 352100 (CN)
(72) Inventor: CHENG, Qi, Ningde, Fujian 352100 (CN); CHEN, Xinxiang, Ningde, Fujian 352100 (CN); LIN, Denghua, Ningde, Fujian 352100 (CN); CHEN, Long, Ningde, Fujian 352100 (CN); HUANG, Shoujun, Ningde, Fujian 352100 (CN); LEI, Yuyong, Ningde, Fujian 352100 (CN); LI, Quankun, Ningde, Fujian 352100 (CN); ZHENG, Yulian, Ningde, Fujian 352100 (CN); WANG, Peng, Ningde, Fujian 352100 (CN)
(74) Representative: Ran, Handong
(86) International application number: PCT/CN2022/107500
(87) International publication number: WO 2024/016351

(57) **Abstract**

The embodiments of the present application relate to the technical field of batteries, and provide an end cover assembly, a battery cell, a battery and an electric device. The end cover assembly comprises an end cover, a connector and an electrode terminal, wherein the end cover is used for sealing an opening of a housing of a battery cell, and is provided with a terminal leading-out hole; the connector is arranged on a side of the end cover that faces away from the housing in a thickness direction; the electrode terminal passes through the terminal leading-out hole, is connected to the connector, and is configured for connection to an electrode assembly of the battery cell, so as to achieve an electrical connection between the connector and the electrode assembly; and in the thickness direction of the end cover, the perimeter of an outer surface of the end cover is L₁, the connector is provided with an interface facing away from the end cover, the perimeter of the interface is L₂, and L₂/L₁ is larger than or equal to 0.25. When a battery cell having the end cover assembly is connected to another battery cell, a connection trajectory obtained when connectors of two battery cells are connected can be increased, such that the bonding strength between the connectors of the two battery cells is enhanced, thereby improving the stability of the electrical connection between the two battery cells.

## Description

### TECHNICAL FIELD

The present application relates to the field of battery technologies, and specifically relates to an end cover assembly, a battery cell, a battery, and an electrical device.

### BACKGROUND

With the development of new-energy technologies, batteries are increasingly widely applied, such as applied in a mobile phone, a laptop, a battery car, an electric vehicle, an electric airplane, an electric boat, an electric toy car, an electric toy boat, an electric toy plane, and an electric tool.

In a battery, to meet voltage requirements, a plurality of battery cells are generally connected in series, in parallel, or in parallel-series, and the stability of an electrical connection between the battery cells needs to be considered. Therefore, how to improve the stability of the electrical connection between the battery cells is an urgent problem to be solved in the battery technologies.

### SUMMARY OF THE INVENTION

Embodiments of the present application provide an end cover assembly, a battery cell, a battery, and an electrical device, which can effectively improve the stability of an electrical connection of battery cells.

In a first aspect, an embodiment of the present application provides an end cover assembly, including an end cover, a connecting element, and an electrode terminal; the end cover is configured to close an opening of a shell of a battery cell, and the end cover is provided with a terminal lead-out hole; the connecting element is arranged on a side of the end cover away from the shell in a thickness direction; the electrode terminal passes through the terminal lead-out hole and is connected to the connecting element, and the electrode terminal is configured to connect an electrode assembly of the battery cell to achieve electrical connection between the connecting element and the electrode assembly; where in the thickness direction of the end cover, the perimeter of an outer surface of the end cover is L₁, the connecting element has a butting surface away from the end cover, the perimeter of the butting surface is L₂, and the butting surface is configured to be electrically connected to an external component, which meet: L₂/L₁≥0.25.

In the above technical solution, a ratio of the perimeter of the butting surface of the connecting element to the perimeter of the outer surface of the end cover is not less than 0.25, so that the perimeter of the butting surface of the connecting element is long. When a battery cell having such an end cover assembly is connected to another battery cell, a connection track of the connecting elements of the two battery cells when connected is capable of being increased, and a bonding strength of the connecting elements of the two battery cells is capable of being enhanced, which is conducive to improving the stability of an electrical connection between the two battery cells.

In some embodiments, 0.5≤L₂/L₁≤1. In this way, while ensuring that the connecting elements of the two battery cells have a long connection track when connected, the perimeter of the butting surface of the connecting element may not be too large, which ensures sufficient bonding strength between the connecting elements of the two battery cells and further improves the connection efficiency.

In some embodiments, 0.5≤L₂/L₁≤0.7. The connection efficiency of the connecting elements of the two battery cells is further improved.

In some embodiments, the electrode terminal is welded to the connecting element, and a first welded portion is formed at a welding position of the electrode terminal and the connecting element, and the first welded portion does not extend beyond the butting surface. The welding of the electrode terminal and the connecting element is capable of improving the connection strength between the electrode terminal and the connecting element, and ensuring a stable current flow. The first welded portion does not extend beyond the butting surface, thereby reducing the risk that the butting surfaces of the connecting elements of the two battery cells cannot be attached to each other due to the first welded portion formed by welding the electrode terminal and the connecting element.

In some embodiments, the connecting element is provided with a through hole, and the electrode terminal passes through the through hole; and in the thickness direction of the end cover, the through hole penetrates the butting surface, the electrode terminal has a first end face, the first end face and the butting surface are located on the same side of the end cover, and the first end face is closer to the end cover than the butting surface. In this way, it is ensured that the butting surfaces of the connecting elements of the two battery cells are capable of being attached to each other over a large area, the connection quality is guaranteed, and a flow area between the two battery cells is increased.

In some embodiments, in a direction of the connecting element pointing to the end cover, the through hole includes a first hole section and a second hole section arranged in sequence, the aperture of the first hole section is larger than the aperture of the second hole section, the first hole section penetrates the butting surface, and an inner circumferential surface of the first hole section is connected to an inner circumferential surface of the second hole section through a first connecting surface; where the first end face is flush with the first connecting surface; or in the thickness direction of the end cover, the first end face is closer to the end cover than the first connecting surface. In this way, the first end face and the butting surface are kept at a distance of at least the first hole section, thereby reducing the influence of the electrode terminal on the butting surfaces of the connecting elements of the two battery cells being attached together.

In some embodiments, in the thickness direction of the end cover, the thickness of the connecting element is L₃, and a distance between the first end face and the butting surface is L₄, which meet 0.1≤L₄/L₃≤0.2. By setting L₄/L₃ within a reasonable range, on the one hand, the distance between the first end face and the butting surface may not be too small, thereby reducing the influence of the electrode terminal on the butting surfaces of the connecting elements of the two battery cells attaching to each other. On the other hand, the distance between the first end face and the butting surface may not be too large, so that the electrode terminal is more partially located in the through hole, thereby increasing the flow area between the electrode terminal and the connecting element and improving the connection stability between the electrode terminal and the connecting element.

In some embodiments, the end cover assembly further includes a first insulating member, and in the thickness direction of the end cover, the first insulating member is at least partially located between the connecting element and the end cover to insulate and isolate the connecting element and the end cover. The first insulating member serves to separate the connecting element and the end cover, so as to achieve insulation between the connecting element and the end cover and reduce the risk of short circuit of the battery cell.

In some embodiments, the first insulating member is a flat plate structure arranged between the connecting element and the end cover. The first insulating member has a simple structure and is easy to shape and manufacture.

In some embodiments, the first insulating member includes a body part and an edge part; the body part is in the thickness direction of the end cover, and the body part is located between the connecting element and the end cover; the edge part surrounds an edge of the body part, and the edge part and the body part jointly define an accommodating space; where the connecting element is partially accommodated in the accommodating space. In this way, the edge part is arranged to surround the connecting element, and the edge part is capable of increasing a creepage distance between the connecting element and the end cover, thereby enhancing the insulation performance between the connecting element and the end cover.

In some embodiments, in the thickness direction of the end cover, the thickness of a part of the connecting element protruding outside the first insulating member is H₁, the thickness of the first insulating member is H₂, and the thickness of the end cover is H₃, which meet 1≤H₁/H₂≤5 and/or 1≤H₁/H₃≤3. In this way, the connecting element has a large connectable region.

In some embodiments, the butting surface is a plane.

In some embodiments, a projection of an edge of the connecting element in the thickness direction of the end cover is completely located on the end cover. The connecting element is completely located within a regional range defined by an edge of the end cover, and the connecting element is not likely to interfere with the mounting of the end cover, so that it is easier to fix the end cover to the shell.

In some embodiments, the projections of the connecting element and the end cover in the thickness direction of the end cover are both rectangular, a length direction of the connecting element is consistent with a length direction of the end cover, and a width direction of the connecting element is consistent with a width direction of the end cover. The connecting element and the end cover of this structure are simple in structure, and the connecting element is capable of being enlarged to achieve large-area current flow after the connecting elements of two battery cells are connected.

In a second aspect, an embodiment of the present application provides a battery cell, including: a shell, an electrode assembly, and the end cover assembly according to any embodiment in the first aspect; the shell has an opening; the electrode assembly is accommodated in the shell; and the end cover closes the opening, and the electrode terminal is electrically connected to the electrode assembly.

In a third aspect, an embodiment of the present application provides a battery, including the battery cell according to any embodiment in the second aspect.

In some embodiments, a plurality of battery cells include a first battery cell and a second battery cell, and in the thickness direction of the end cover, the butting surface of the first battery cell and the butting surface of the second battery cell abut against and are connected to each other to achieve the electrical connection between the first battery cell and the second battery cell. By connecting a connecting element of the first battery cell and a connecting element of the second battery cell together, a stable flow of current between the connecting element of the first battery cell and the connecting element of the second battery cell can be achieved.

In some embodiments, the connecting element of the first battery cell is welded to the connecting element of the second battery cell, a second welded portion is formed at a welding position, and the second welded portion extends along an edge of the butting surface. A ratio of the perimeter of the butting surface of the connecting element to the perimeter of an outer surface of the end cover is set within a reasonable range, and therefore, the perimeter of the butting surface of the connecting element is long, thereby increasing the perimeter of the second welded portion, enhancing the bonding strength between the connecting element of the first battery cell and the connecting element of the second battery cell, and improving the stability of the electrical connection between the first battery cell and the second battery cell.

In some embodiments, the end cover assembly further includes a first insulating member, and the first insulating member is at least partially located between the connecting element and the end cover in the thickness direction of the end cover to insulate and isolate the connecting element and the end cover. In the thickness direction of the end cover, a sum of the thickness of a part of the connecting element of the first battery cell protruding outside the first insulating member and the thickness of a part of the connecting element of the second battery cell protruding outside the first insulating member is H₄, and the width of the second welded portion is H₅, which meet 0.25≤H₅/H₄≤1. Setting H₅/H₄ within a reasonable range is capable of ensuring a large weld width after the connecting element of the first battery cell and the connecting element of the second battery cell are welded, thereby further increasing the bonding strength between the connecting element of the first battery cell and the connecting element of the second battery cell.

In a fourth aspect, an embodiment of the present application provides an electrical device, including the battery according to any embodiment in the third aspect.

### BRIEF DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
Fig. 1 is a schematic structural diagram of a vehicle according to some embodiments of the present application;
Fig. 2 is an exploded view of a battery according to some embodiments of the present application;
Fig. 3 is a sectional diagram of a battery cell according to some embodiments of the present application;
Fig. 4 is a schematic structural diagram of an end cover assembly according to some embodiments of the present application;
Fig. 5 is a top view of the end cover assembly shown in Fig. 4;
Fig. 6 is a partial enlarged diagram at A in Fig. 4;
Fig. 7 is a partial diagram of a connecting element shown in Fig. 4;
Fig. 8 is a schematic structural diagram of an end cover assembly according to other embodiments of the present application;
Fig. 9 is a schematic structural diagram of a first insulating member shown in Fig. 8;
Fig. 10 is a schematic diagram of connecting a first battery cell and a second battery cell according to an embodiment of the present application; and
Fig. 11 is a partial enlarged diagram at B in Fig. 10.

Reference numerals: 1-Shell; 2-Electrode assembly; 21-Positive tab; 22-Negative tab; 3-End cover assembly; 31-End cover; 310-Outer surface; 311-Terminal lead-out hole; 32-Connecting element; 321-Through hole; 3211-First hole section; 3212-Second hole section; 3213-First connecting surface; 3214-Third hole section; 3215-Second connecting surface; 322-Butting surface; 323-Inner surface; 33-Electrode terminal; 331-Terminal body; 3311-First section; 3312-Second section; 332-Position-limiting portion; 333-First end face; 34-First welded portion; 35-First insulating member; 351-Body part; 352-Edge part; 353-Accommodating space; 36-Second insulating member; 37-Sealing member; 10-Battery cell; 10a-First battery cell; 10b-Second battery cell; 20-Box; 201-First part; 202-Second part; 30-Second welded portion; 100-Battery; 200-Controller; 300-Motor; 1000-Vehicle; Z-Thickness direction.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "having" and any variations thereof in the specification and the claims of the present application as well as the foregoing description of the drawings are intended to cover non-exclusive inclusions. The terms "first", "second", etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting", "connecting", "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, identical reference numerals indicate identical components, and for the sake of brevity, detailed descriptions of identical components are omitted in different embodiments. It should be understood that the thickness, length, width, and other thicknesses of the various components in the embodiments of the present application shown in the drawings, as well as the overall thickness, length, width, and other thicknesses of an integrated apparatus, are for illustrative purposes only, and should not constitute any limitation to the present application.

In the present application, "a plurality of" appeared refers to two or more (including two).

In the present application, the battery cell may include a lithium-ion secondary battery, a lithium-ion primary battery, a lithium sulfur battery, a sodium lithium-ion battery, a sodium-ion battery or a magnesium-ion battery and so on. This is not limited in the embodiments of the present application. The battery cell may be in a cylindrical shape, a flat shape, a cuboid shape or another shape, which is also not limited in the embodiments of the present application. The battery cells are generally classified into three types depending on the way of package: cylindrical battery cells, prismatic battery cells and pouch battery cells, which are also not limited in the embodiments of the present application.

The battery mentioned in the embodiments of the present application refers to a single physical module including one or more battery cells to provide a higher voltage and capacity. For example, the battery mentioned in the present application may include a battery module or a battery pack, etc. The battery generally includes a box for packaging one or more battery cells. The box can prevent liquid or other foreign matters from affecting charging or discharging of the battery cells.

The battery cell includes an electrode assembly and an electrolytic solution, and the electrode assembly is composed of a positive electrode plate, a negative electrode plate and a separator. The operation of the battery cell mainly relies on the movement of metal ions between the positive electrode plate and the negative electrode plate. The positive electrode plate includes a positive electrode current collector and a positive electrode active material layer, a surface of the positive electrode current collector is coated with the positive electrode active material layer, the positive electrode current collector not coated with the positive electrode active material layer protrudes from the positive electrode current collector already coated with the positive electrode active material layer, and the positive electrode current collector not coated with the positive electrode active material layer is used as a positive tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode plate includes a negative electrode current collector and a negative electrode active material layer, a surface of the negative electrode current collector is coated with the negative electrode active material layer, the negative electrode current collector not coated with the negative electrode active material layer protrudes from the negative electrode current collector already coated with the negative electrode active material layer, and the negative electrode current collector not coated with the negative electrode active material layer is used as a negative tab. The negative electrode current collector may be of a material of copper, and the negative electrode active material may be carbon, silicon, etc. In order to ensure that no fusing occurs when a large current passes, there are a plurality of positive tabs which are stacked together, and there are a plurality of negative tabs which are stacked together. The separator may be of a material such as polypropylene (PP) or polyethylene (PE). In addition, the electrode assembly may have a wound structure or a stacked structure, which is not limited in the embodiments of the present application.

In a battery, in order to meet requirements of high current or high voltage, a plurality of battery cells in a box need to be connected in series, in parallel, or in parallel-series. At present, a busbar component is generally configured to realize an electrical connection between two battery cells. The busbar component needs to occupy a part of the space inside the box, which reduces the utilization rate of the space inside the box and reduces the energy density of the battery.

In order to increase the utilization rate of the internal space of the box and improve the energy density of the battery, the busbar component may be removed and output components of the two battery cells for outputting electrical energy can be directly welded together. For example, to realize the series connection of two battery cells, a negative output component of one battery cell may be welded together to a positive output component of the other battery cell.

The inventors have noticed that in a vibration environment, a welding position of the output components of the two battery cells is subjected to a large stress, which may easily lead to connection failure of the output components of the two battery cells, and the electrical connection between the two battery cells is poor in stability.

In view of this, an embodiment of the present application provides an end cover assembly, including an end cover, a connecting element, and an electrode terminal. The end cover is provided with a terminal lead-out hole. The connecting element is arranged on a side of the end cover away from the shell in a thickness direction. The electrode terminal passes through the terminal lead-out hole and is connected to the connecting element. In the thickness direction of the end cover, the perimeter of an outer surface of the end cover is L₁, the connecting element has a butting surface away from the end cover, the perimeter of the butting surface is L₂, and the butting surface is configured to be electrically connected to an external component, which meet: L₂/L₁≥0.25.

In such an end cover assembly, a ratio of the perimeter of the butting surface of the connecting element to the perimeter of the outer surface of the end cover is not less than 0.25, so that the perimeter of the butting surface of the connecting element is long. When a battery cell having such an end cover assembly is connected to another battery cell, a connection track of the connecting elements (output components) of the two battery cells when connected is capable of being increased, and a bonding strength of the connecting elements of the two battery cells is capable of being enhanced, which is conducive to improving the stability of an electrical connection between the two battery cells.

The end cover assembly described in the embodiments of the present application is applicable to battery cells, batteries, and electrical devices using the batteries.

The electrical device may be a vehicle, a mobile phone, a portable device, a laptop, a ship, a spacecraft, an electric toy, an electric tool, and the like. The vehicle may be a fuel vehicle, a gas vehicle or a new energy vehicle. The new energy vehicle may be an all-electric vehicle, a hybrid electric vehicle, an extended-range vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The above electrical device is not specifically limited in the embodiments of the present application.

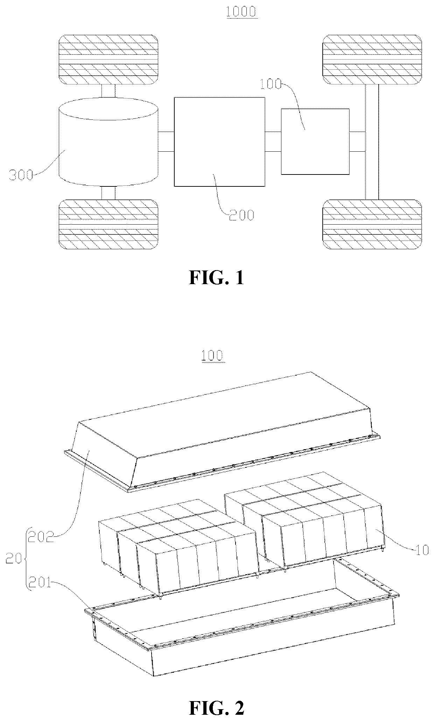

Referring to Fig. 1, Fig. 1 is a schematic structural diagram of a vehicle 1000 according to some embodiments of the present application. The interior of the vehicle 1000 is provided with a battery 100, and the battery 100 may be provided at the bottom or head or tail of the vehicle 1000. The battery 100 may be used as a power supply for the vehicle 1000, for example, the battery 100 may be used as an operating power source for the vehicle 1000.

The vehicle 1000 may further include a controller 200 and a motor 300. The controller 200 is used to control the battery 100 to supply power to the motor 300, for example, for the operating power demand when the vehicle 1000 is starting, navigating and driving.

In some examples of the present application, the battery 100 not only can serve as an operating power source of the vehicle 1000, but also can serve as a driving power source of the vehicle 1000, to provide a driving power for the vehicle 1000 in place of or partially in place of fuel or natural gas.

Referring to FIG. 2, FIG. 2 is an exploded view of a battery 100 provided in some embodiments of the present application. The battery 100 includes a battery cell 10 and a box 20. The box 20 is configured to accommodate the battery cell 10.

The box 20 is a component for accommodating the battery cell 10, the box 20 provides an accommodating space for the battery cell 10, and the box 20 may be of various structures. In some embodiments, the box 20 may include a first part 201 and a second part 202. The first part 201 and the second part 202 cover each other to define the accommodating space for accommodating the battery cell 10. The first part 201 and the second part 202 may have a variety of shapes, such as a cuboid and a cylinder. The first part 201 may be of a hollow structure with one side open, the second part 202 may also be of a hollow structure with one side open, and the open side of the second part 202 covers the open side of the first part 201, so as to form the box 20 having the accommodating space. Alternatively, the first part 201 may be of a hollow structure with one side open, the second part 202 may be a plate-like structure, and the second part 202 covers the open side of the first part 201, so as to form the box 20 having the accommodating space. The first part 201 and the second part 202 may be sealed by means of a sealing element, and the sealing element may be a sealing ring, a sealant, or the like.

In the battery 100, there may be a plurality of battery cells 10, and the plurality of battery cells 10 may be connected in series or in parallel or in parallel-series, and the parallel-series connection means that the plurality of battery cells 10 are connected in both series and parallel. The plurality of battery cells 10 may be connected in series or in parallel or in parallel-series first to form a plurality of battery modules, and the plurality of battery modules may then be connected in series or in parallel or in parallel-series to form an entirety that is accommodated in the box 20. Alternatively, all the battery cells 10 are directly connected in series or in parallel or in parallel-series, and then an entirety composed of all the battery cells 10 is accommodated in the box 20.

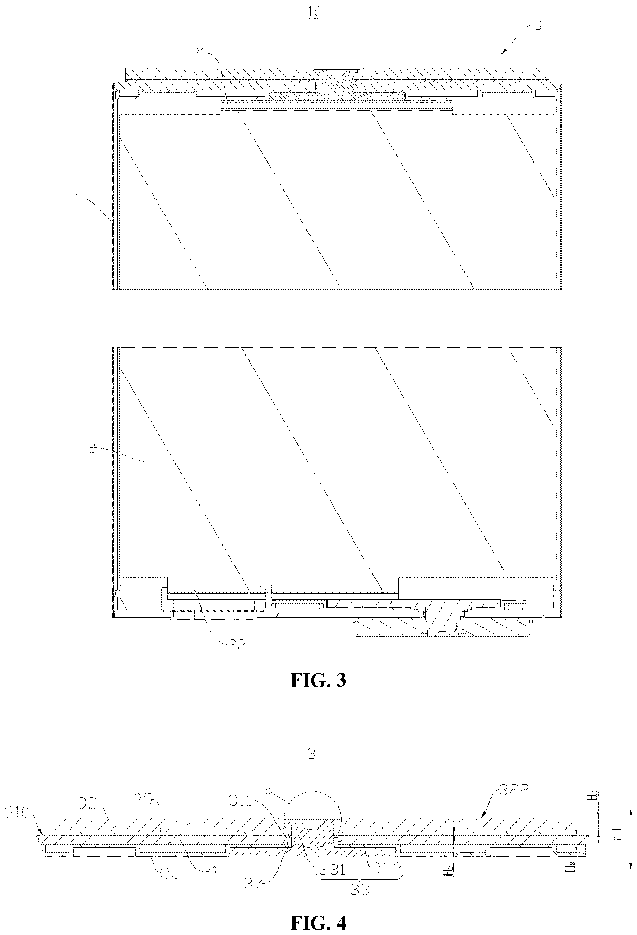

Referring to Fig. 3, Fig. 3 is a sectional diagram of a battery cell 10 according to some embodiments of the present application. The battery cell 10 may include a shell 1, an electrode assembly 2, and an end cover assembly 3.

The shell 1 is a component for accommodating the electrode assembly 2, and the shell 1 may be a hollow structure with an opening formed at one end, and the shell 1 may also be a hollow structure with openings formed at two opposite ends. The shell 1 may be of a variety of shapes, such as a cylinder or a cuboid. The shell 1 may be made of various materials, such as copper, iron, aluminum, steel, and aluminum alloy.

The electrode assembly 2 is a component of a battery cell 10 where an electrochemical reaction occurs. The electrode assembly 2 may include a positive electrode plate, a negative electrode plate, and a separator. The electrode assembly 2 may be a wound structure formed by winding the positive electrode plate, the separator, and the negative electrode plate, or may be a laminated structure formed by laminated arrangement of the positive electrode plate, the separator, and the negative electrode plate. The electrode assembly 2 has a positive tab 21 and a negative tab 22, the positive tab 21 may be a part of the positive electrode plate on which a positive electrode active material layer is not coated, and the negative tab 22 may be a part of the negative electrode plate on which a negative electrode active material layer is not coated.

The end cover assembly 3 is configured to close the opening of the shell 1 to isolate an internal environment of the battery cell 10 from an external environment. In the battery cell 10, there may be one or two end cover assemblies 3. Taking the shell 1 being a hollow structure with openings at two opposite ends as an example, two end cover assemblies 3 are correspondingly arranged, and the two end cover assemblies 3 respectively close the two openings of the shell 1, and the positive tab 21 and the negative tab 22 of the electrode assembly 2 are electrically connected to the two end cover assemblies 3 respectively. The specific structure of the end cover assembly 3 may be described in detail below with reference to the accompanying drawings.

Referring to Fig. 4, Fig. 4 is a schematic structural diagram of an end cover assembly 3 according to some embodiments of the present application. An embodiment of the present application provides an end cover assembly 3, including an end cover 31, a connecting element 32, and an electrode terminal 33. The end cover 31 is configured to close an opening of a shell 1 of a battery cell 10, and the end cover 31 is provided with a terminal lead-out hole 311. The connecting element 32 is arranged on a side of the end cover 31 away from the shell 1 in a thickness direction Z. The electrode terminal 33 passes through the terminal lead-out hole 311 and is connected to the connecting element 32, where the electrode terminal 33 is configured to connect an electrode assembly 2 of the battery cell 10 to achieve an electrical connection between the connecting element 32 and the electrode assembly 2. In the thickness direction Z of the end cover 31, the perimeter of an outer surface 310 of the end cover 31 is L₁, and the perimeter of a butting surface 322 of the connecting element 32 is L₂, the butting surface 322 being configured to be electrically connected to an external component, which meet: L₂/L₁≥0.25.

The end cover 31 is a component that closes the opening of the shell 1 to isolate an internal environment of the battery cell 10 from an external environment. The end cover 31 may be fixed to the shell 1 by welding, crimping, or the like.

The outer surface 310 is a surface of the end cover 31 located outside the battery cell 10 in the thickness direction Z, and is also the surface of the end cover 31 facing the connecting element 32 in the thickness direction Z. The outer surface 310 is connected to an outer side surface of the end cover 31, and the outer side surface is parallel to the thickness direction Z of the end cover 31. The outer surface 310 may be in various shapes, such as a rectangle or a circle. Taking the outer surface 310 being a rectangle as an example, four edges of the outer surface 310 are respectively connected to four outer side surfaces. The outer surface 310 may be a plane, a curved surface, or the like.

The connecting element 32 is an output component configured to output electric energy of the battery cell 10. If the connecting element 32 is connected to the positive tab 21 of the electrode assembly 2 through the electrode terminal 33, the connecting element 32 is a positive electrode output component of the battery cell 10. If the connecting element 32 is connected to the negative tab 22 of the electrode assembly 2 through the electrode terminal 33, the connecting element 32 is a negative electrode output component of the battery cell 10. After the end cover 31 is connected to the shell 1 and closes the opening of the shell 1, the connecting element 32 is located on the side of the end cover 31 away from the shell 1 in the thickness direction Z, that is, the connecting element 32 is located outside the battery cell 10. The connecting element 32 may be a metal conductor, such as copper, iron, aluminum, steel, and aluminum alloy.

The butting surface 322 is a surface where the connecting element 32 is electrically connected to an external component. The external component may be a connecting element 32 of another end cover assembly 3. For example, when the connecting elements 32 of two battery cells 10 are connected, the butting surface 322 of the connecting element 32 of one battery cell 10 may be connected to the butting surface 322 of the connecting element 32 of the other battery cell 10 to achieve the electrical connection of the two battery cells 10. The butting surface 322 may also be understood as the end face of the connecting element 32 that is away from the end cover 31 in the thickness direction Z of the end cover 31. The butting surface 322 may be in various shapes, such as a rectangle or a circle. If the outer surface 310 is rectangular, the butting surface 322 may also be rectangular, and if the outer surface 310 is circular, the butting surface 322 may also be circular. The butting surface 322 may be a plane, a curved surface, or the like.

The terminal lead-out hole 311 penetrates through holes 321 on inner and outer surfaces of the end cover 31 in the thickness direction Z. The electrode terminal 33 is a component that passes through the terminal lead-out hole 311 and connects the electrode terminal 33 and the electrode assembly 2. A sealing member 37 may be arranged between the electrode terminal 33 and the end cover 31 to seal the terminal lead-out hole 311. The electrode terminal 33 and the connecting element 32 may be connected in various manners, such as welding, riveting, bonding, and integral forming. The electrode terminal 33 may be a metal conductor, such as copper, iron, aluminum, steel, and aluminum alloy.

For example, as shown in Fig. 4, the electrode terminal 33 includes a terminal body 331 and a position-limiting portion 332, the terminal body 331 passes through the terminal lead-out hole 311, the connecting element 32 is connected to the terminal body 331, and the position-limiting portion 332 is connected to one end of the terminal body 331 away from the connecting element 32. **In** the thickness direction Z of the end cover 31, the position-limiting portion 332 and the connecting element 32 are respectively located on both sides of the end cover 31 to fix the electrode terminal 33 and the connecting element 32 to the end cover 31. The terminal body 331 and the position-limiting portion 332 may be integrally formed. The position-limiting portion 332 is configured to be electrically connected to the positive tab 21 or the negative tab 22 of the electrode assembly 2. Of course, the position-limiting portion 332 and the positive tab 21 or the negative tab 22 of the electrode assembly 2 may be directly connected, for example, by welding. The position-limiting portion 332 and the positive tab 21 or the negative tab 22 of the electrode assembly 2 may also be indirectly connected, for example, indirectly connected by a current collecting member. The current collecting member may be a metal conductor, such as copper, iron, aluminum, steel, and aluminum alloy.

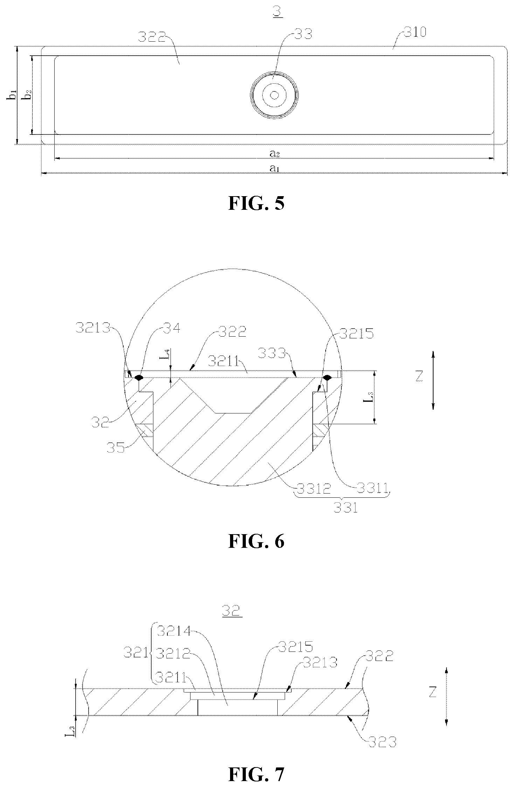

The perimeter of the outer surface 310 is the circumferential length of the edges of the outer surface 310, and the perimeter of the butting surface 322 is the circumferential length of the edges of the butting surface 322. As shown in Fig. 5, Fig. 5 is a top view of the end cover assembly 3 shown in Fig. 4. For example, the outer surface 310 and the butting surface 322 are both rectangular, the length of the outer surface 310 is a₁, the width of the outer surface 310 is b₁, the length of the butting surface 322 is a₂, the width of the butting surface 322 is b₂, then L₁=2(a₁+b₁), and L₂=2(a₂+b₂). L₂/L₁ may be any numerical value not less than 0.25, such as 0.25, 0.3, 0.4, 0.5, 0.6, 0.7, 0.8, 0.9, 1, 2, 3, 4, and 5.

In the embodiment of the present application, a ratio of the perimeter of the butting surface 322 of the connecting element 32 to the perimeter of the outer surface 310 of the end cover 31 is not less than 0.25, so that the perimeter of the butting surface 322 of the connecting element 32 is long. When a battery cell 10 having such an end cover assembly 3 is connected to another battery cell 10, a connection track of the connecting elements 32 of the two battery cells 10 when connected is capable of being increased, and a bonding strength of the connecting elements 32 of the two battery cells 10 is capable of being enhanced, which is conducive to improving the stability of the electrical connection between the two battery cells 10. For example, when the connecting elements 32 of two battery cells 10 are welded, the welding may be performed circumferentially along the edges of the butting surface 322, thereby increasing a welding track when the two are welded.

In some embodiments, 0.5≤L₂/L₁≤1.

In this embodiment, L₂/L₁ any be any numerical value between 0.5 and 1, such as 0.5, 0.6, 0.7, 0.8, 0.9, and 1.

In this embodiment, by setting L₂/L₁ in a reasonable range, while ensuring that the connecting elements 32 of the two battery cells 10 have a long connection track when connected, the perimeter of the butting surface 322 of the connecting element 32 may not be too large, which ensures sufficient bonding strength between the connecting elements 32 and further improves the connection efficiency.

In some embodiments, 0.5≤L₂/L₁≤0.7. The connection efficiency of the connecting elements 32 of the two battery cells 10 is further improved.

In some embodiments, referring to Fig. 6, Fig. 6 is a partial enlarged diagram at A in Fig. 4. The electrode terminal 33 is welded to the connecting element 32, and a first welded portion 34 is formed at a welding position of the electrode terminal 33 and the connecting element 32, and the first welded portion 34 does not extend beyond the butting surface 322.

The first welded portion 34 is a portion where the electrode terminal 33 and the connecting element 32 are welded to form a weld mark, and the electrode terminal 33 and the connecting element 32 are fixed by the first welded portion 34.

In this embodiment, the welding of the electrode terminal 33 and the connecting element 32 is capable of improving the connection strength between the electrode terminal 33 and the connecting element 32, and ensuring a stable current flow. The first welded portion 34 does not extend beyond the butting surface 322, thereby reducing the risk that the butting surfaces 322 of the connecting elements 32 of the two battery cells 10 cannot be attached to each other due to the first welded portion 34 formed by welding the electrode terminal 33 and the connecting element 32.

In some embodiments, referring to Fig. 6 and Fig. 7, Fig. 7 is a partial diagram of the connecting element 32 shown in Fig. 4. The connecting element 32 is provided with a through hole 321, and the electrode terminal 33 passes through the through hole 321. In the thickness direction Z of the end cover 31, the through hole 321 penetrates the butting surface 322. The electrode terminal 33 has a first end face 333. The first end face 333 and the butting surface 322 are located on the same side of the end cover 31. The first end face 333 is closer to the end cover 31 than the butting surface 322.

In the thickness direction Z of the end cover 31, the connecting element 32 further has an inner surface 323 facing the end cover 31, and the through hole 321 penetrates the inner surface 323. The through hole 321 may be an equal-diameter hole penetrating the inner surface 323 and the butting surface 322, or may be a variable-diameter hole penetrating the inner surface 323 and the butting surface 322, for example, a stepped hole.

The first end face 333 is an end face of the electrode terminal 33 that is located on the same side of the end cover 31 in the thickness direction Z together with the butting surface 322 and the connecting element 32. In the embodiment where the electrode terminal 33 includes the terminal body 331 and the position-limiting portion 332, the terminal body 331 passes through the through hole 321, and the first end face 333 is the end face of the terminal body 331 that is away from the position-limiting portion 332 in the thickness direction Z of the end cover 31.

In this embodiment, the first end face 333 is closer to the end cover 31 than the butting surface 322, so that the electrode terminal 33 does not protrude from the butting surface 322 of the first end face 333, thereby ensuring that the butting surfaces 322 of the connecting elements 32 of the two battery cells 10 is capable of attaching to each other over a large area, which ensures the connection quality and increases a flow area between the two battery cells 10.

In some embodiments, still referring to Fig. 6 and Fig. 7, in a direction of the connecting element 32 pointing to the end cover 31 (shown in Fig. 4), the through hole 321 includes a first hole section 3211 and a second hole section 3212 arranged in sequence, the aperture of the first hole section 3211 is larger than the aperture of the second hole section 3212, the first hole section 3211 penetrates the butting surface 322, and an inner circumferential surface of the first hole section 3211 is connected to an inner circumferential surface of the second hole section 3212 via a first connecting surface 3213. The first end face 333 is flush with the first connecting surface 3213. Alternatively, in the thickness direction Z of the end cover 31, the first end face 333 is closer to the end cover 31 than the first connecting surface 3213.

The through hole 321 is a stepped hole, the aperture of the first hole section 3211 is larger than the aperture of the second hole section 3212, and the first hole section 3211 and the second hole section 3212 may be coaxially arranged. The inner circumferential surface of the first hole section 3211 is a hole wall surface of the first hole section 3211, and the inner circumferential surface of the second hole section 3212 is a hole wall surface of the second hole section 3212. The first connecting surface 3213 is a plane connecting the inner circumferential surface of the first hole section 3211 and the inner circumferential surface of the second hole section 3212. If the first end face 333 is closer to the end cover 31 than the first connecting surface 3213 in the thickness direction Z of the end cover 31, a distance between the first end face 333 and the butting surface 322 of the connecting element 32 is greater than the depth of the first hole section 3211, so that the first end face 333 and the butting surface 322 of the connecting element 32 are farther apart. As shown in Fig. 7, if the first end face 333 is flush with the first connecting surface 3213, the first end face 333 and the first connecting surface 3213 are located in the same plane, and the distance between the first end face 333 and the butting surface 322 of the connecting element 32 is equal to the depth of the first hole section 3211.

In the embodiment where the electrode terminal 33 and the connecting element 32 are welded to form the first welded portion 34, the first welded portion 34 may extend along the edge of the first end face 333, and the electrode terminal 33 and the connecting element 32 are fixed by the first welded portion 34. The first hole section 3211 is configured to accommodate a part of the first welded portion protruding from the first connecting surface 3213, so that the first welded portion 34 does not extend beyond the butting surface 322.

For example, the through hole 321 may further include a third hole section 3214. In the direction of the connecting element 32 pointing to the end cover 31, the apertures of the first hole section 3211, the second hole section 3212, and the third hole section 3214 decrease successively. The first hole section 3211 and the third hole section 3214 respectively penetrate the butting surface 322 and the inner surface 323 of the connecting element 32. An inner circumferential surface of the third hole section 3214 is connected to the inner circumferential surface of the second hole section 3212 via a second connecting surface 3215. The terminal body 331 includes a first section 3311 and a second section 3312. In the thickness direction Z of the end cover 31, the first section 3311 and the position-limiting portion 332 are respectively connected to two ends of the second section 3312. The first section 3311 and the second section 3312 are coaxially arranged. The diameter of the first section 3311 is greater than the diameter of the second section 3312. The end of the first section 3311 that is away from the second section 3312 forms the first end face 333. The second section 3312 passes through the third hole section 3214. The first section 3311 is located in the second hole section 3212 and abuts against the second connecting surface 3215.

In this embodiment, the first end face 333 and the butting surface 322 are kept at a distance of at least the first hole section 3211, thereby reducing the influence of the electrode terminal 33 on the butting surfaces 322 of the connecting elements 32 of the two battery cells 10 being attached together.

In some embodiments, still referring to Fig. 6 and Fig. 7, in the thickness direction Z of the end cover 31, the thickness of the connecting element 32 is L₃, and a distance between the first end face 333 and the butting surface 322 is L₄, which meet 0.1≤L₄/L₃≤0.2.

The thickness of the connecting element 32 is the distance between the butting surface 322 and the inner surface 323 of the connecting element 32 in the thickness direction Z of the end cover 31.

L₄/L₃ may be any numerical value between 0.1 and 0.2, such as 0.1, 0.12, 0.14, 0.16, 0.18, and 0.2.

In this embodiment, by setting L₄/L₃ within a reasonable range, on the one hand, the distance between the first end face 333 and the butting surface 322 may not be too small, thereby reducing the influence of the electrode terminal 33 on the butting surfaces 322 of the connecting elements 32 of the two battery cells 10 attaching to each other, thereby reducing the risk of the first welded portion 34 formed by welding the electrode terminal 33 and the connecting element 32 protruding from the butting surface 322 of the connecting element 32. On the other hand, the distance between the first end face 333 and the butting surface 322 may not be too large, so that the electrode terminal 33 is more partially located in the through hole 321, thereby increasing the flow area between the electrode terminal 33 and the connecting element 32 and improving the connection stability between the electrode terminal 33 and the connecting element 32.

In some embodiments, still referring to Fig. 4, the end cover assembly 3 may further include a first insulating member 35, and in the thickness direction Z of the end cover 31, the first insulating member 35 is at least partially located between the connecting element 32 and the end cover 31 to insulate and isolate the connecting element 32 and the end cover 31.

The first insulating member 35 is made of an insulating material, such as plastic and rubber. The first insulating member 35 may be partially located between the connecting element 32 and the end cover 31, or may be completely located between the connecting element 32 and the end cover 31.

In this embodiment, the first insulating member 35 serves to separate the connecting element 32 and the end cover 31, so as to achieve insulation between the connecting element 32 and the end cover 31 and reduce the risk of short circuit of the battery cell 10.

In some embodiments, the end cover assembly 3 may further include a second insulating member 36, and in the thickness direction Z of the end cover 31, the second insulating member 36 is arranged on one side of the end cover 31 away from the connecting element 32. The second insulating member 36 is configured to insulate and isolate the end cover 31 and the electrode assembly 2 (shown in Fig. 3).

The second insulating member 36 is a component that separates the end cover 31 and the electrode assembly 2 to achieve insulation and isolation between the electrode assembly 2 and the end cover 31. The second insulating member 36 is made of an insulating material such as plastic and rubber. In the embodiment where the electrode terminal 33 has the position-limiting portion 332, the second insulating member 36 may be partially located between the position-limiting portion 332 of the electrode terminal 33 and the end cover 31 to separate the position-limiting portion 332 and the end cover 31, for insulating and isolating the position-limiting portion 332 from the end cover 31. The second insulating member 36, the end cover 31, and the first insulating member 35 are limited between the connecting element 32 and the position-limiting portion 332.

In some embodiments, as shown in Fig. 4, the first insulating member 35 is a flat plate structure arranged between the connecting element 32 and the end cover 31.

The shape of the first insulating member 35 may be the same as that of the connecting element 32. For example, the first insulating member 35 and the connecting element 32 are both rectangular. For another example, the first insulating member 35 and the connecting element 32 are both circular. The edge of the first insulating member 35 may be flush with the edge of the connecting element 32, or the edge of the first insulating member 35 may exceed the edge of the connecting element 32, so that a projection of the edge of the connecting element 32 in the thickness direction Z of the end cover 31 is completely located inside the first insulating member 35, thereby achieving better insulation between the connecting element 32 and the end cover 31.

In this embodiment, the first insulating member 35 is a flat plate structure, which is simple in structure and is easy to shape and manufacture.

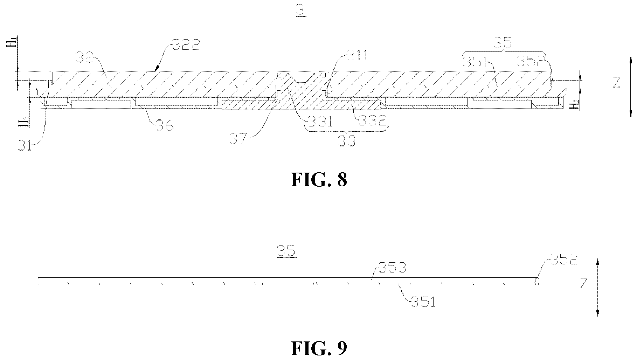

In some embodiments, referring to Fig. 8 and Fig. 9, Fig. 8 a schematic structural diagram of an end cover assembly 3 according to other embodiments of the present application, and Fig. 9 is a schematic structural diagram of the first insulating member 35 shown in Fig. 8. The first insulating member 35 includes a body part 351 and an edge part 352. The body part 351 is in the thickness direction Z of the end cover 31, and the body part 351 is located between the connecting element 32 and the end cover 31. The edge part 352 surrounds the edge of the body part 351, and the edge part 352 and the body part 351 together define an accommodating space 353. The connecting element 32 is partially accommodated in the accommodating space 353.

The body part 351 is a part of the first insulating member 35 arranged between the connecting element 32 and the end cover 31, and the body part 351 may be a flat plate structure. The edge part 352 is a part of the first insulating member 35 that surrounds the edge of the body part 351. The edge part 352 is an annular structure that extends along the edge of the body part 351. The edge part 352 wraps the periphery of the connecting element 32. The annular structure referred to here may be a circular annular structure or a rectangular annular structure. The edge part 352 and the body part 351 may be integrally formed.

The accommodating space 353 is formed inside the first insulating member 35 and is defined by the edge part 352 and the body part 351 together. In the thickness direction Z of the end cover 31, the accommodating space 353 forms an opening on one side of the edge part 352 away from the main body part, and the insulating member can enter the accommodating space 353 through the opening.

In this embodiment, the connecting element 32 is partially accommodated in the accommodating space 353 so that the edge part 352 surrounds the connecting element 32. The edge part 352 is capable of increasing the creepage distance between the connecting element 32 and the end cover 31 and enhancing the insulation performance between the connecting element 32 and the end cover 31.

In some embodiments, referring to Fig. 4 and Fig. 8, in the thickness direction Z of the end cover 31, the thickness of a part of the connecting element 32 protruding outside the first insulating member 35 is H₁, the thickness of the first insulating member 35 is H₂, and the thickness of the end cover 31 is H₃, which meet 1≤H₁/H₂≤5 and/or 1≤H₁/H₃≤3.

H₁/H₂ may be any numerical value between 1 and 5, such as 1, 2, 3, 4, and 5. H₁/H₃ may be any numerical value between 1 and 3, such as 1, 2, and 3.

As shown in Fig. 4, in the embodiment where the first insulating member 35 is a flat plate structure, the connecting element 32 is located on one side of the first insulating member 35 away from the end cover 31, the connecting element 32 as a whole protrudes outside the first insulating member 35, and the thickness of the portion of the connecting element 32 protruding outside the first insulating member 35 is the thickness of the connecting element 32, that is, H₁=L₃. The thickness of the first insulating member 35 is a distance between a surface of the first insulating member 35 facing the connecting element 32 and a surface facing the end cover 31.

As shown in Fig. 8, in the embodiment where the first insulating member 35 includes the body part 351 and the edge part 352, since the connecting element 32 is partially located in the accommodating space 353, the thickness of the portion of the connecting element 32 protruding outside the first insulating member 35 is the thickness of the portion of the connecting element 32 located outside the accommodating space 353. The thickness of the first insulating member 35 is a distance between a surface of the edge part 352 away from the end cover 31 and a surface of the body part 351 facing the end cover 31.

In this embodiment, H₁/H₂ and/or H₁/H₃ are set within a reasonable range, so that the connecting element 32 has a large connectable region. Taking the welding of the connecting elements 32 of two battery cells 10 as an example, this structure can increase welding regions of the connecting elements 32 to facilitate welding.

In some embodiments, the butting surface 322 is a plane. The structure of the connecting element 32 is simplified to reduce the difficulty in manufacturing the connecting element 32.

In some embodiments, a projection of an edge of the connecting element 32 in the thickness direction Z of the end cover 31 is completely located on the end cover 31.

The edge of the connecting element 32 does not extend beyond the edge of the end cover 31, so that the connecting element 32 is completely located within a regional range defined by the edge of the end cover 31. The connecting element 32 is unlikely to interfere with the mounting of the end cover 31, so that it is easier to fix the end cover 31 to the shell 1. For example, when the end cover 31 is welded to the shell 1, a welding position is an edge position of the end cover 31. The above structure can reduce the influence of the connecting element 32 on the end cover 31 and the shell 1 during welding, and it is not easy to cause false welding, thereby ensuring the firmness of the end cover 31 and the shell 1 after welding.

In some embodiments, the projections of the connecting element 32 and the end cover 31 in the thickness direction Z of the end cover 31 are both rectangular, a length direction of the connecting element 32 is consistent with a length direction of the end cover 31, and a width direction of the connecting element 32 is consistent with a width direction of the end cover 31. The connecting element 32 and the end cover 31 of this structure are simple in structure, and the connecting element 32 is capable of being enlarged to achieve large-area current flow after the connecting elements 32 of two battery cells 10 are connected.

An embodiment of the present application provides a battery cell 10, including a shell 1, an electrode assembly 2, and the end cover assembly 3 according to any one of the above embodiments. The shell 1 has an opening. The electrode assembly 2 is accommodated in the shell 1. The end cover 31 closes the opening, and the electrode terminal 33 is electrically connected to the electrode assembly 2.

An embodiment of the present application provides a battery 100, including the battery cell 10 according to any one of the above embodiments.

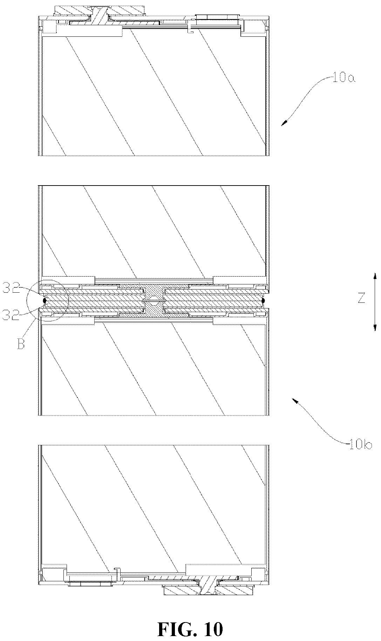

In some embodiments, referring to Fig. 10, Fig. 10 is a schematic diagram of connecting a first battery cell 10a and a second battery cell 10b according to an embodiment of the present application. A plurality of battery cells 10 include a first battery cell 10a and a second battery cell 10b, and in the thickness direction Z of the end cover 31, the butting surface 322 of the first battery cell 10a and the butting surface 322 of the second battery cell 10b abut against and are connected to each other to achieve the electrical connection between the first battery cell 10a and the second battery cell 10b.

The connecting element 32 of the first battery cell 10a and the connecting element 32 of the second battery cell 10b may be connected in various manners, such as welding and bonding.

There may be two, three, five, or more battery cells 10 in the battery 100. The first battery cell 10a and the second battery cell 10b are two battery cells 10 in the battery 100. The first battery cell 10a and the second battery cell 10b may be connected in series, and two connecting elements 32 connected to each other in the first battery cell 10a and the second battery cell 10b have opposite polarities.

By connecting the connecting element 32 of the first battery cell 10a and the connecting element 32 of the second battery cell 10b together, a stable flow of current between the connecting element 32 of the first battery cell 10a and the connecting element 32 of the second battery cell 10b can be achieved.

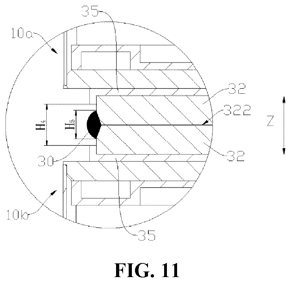

In some embodiments, as shown in Fig. 11, Fig. 11 is a partial enlarged diagram at B in Fig. 10. The connecting element 32 of the first battery cell 10a is welded to the connecting element 32 of the second battery cell 10b, a second welded portion 30 is formed at a welding position, and the second welded portion 30 extends along an edge of the butting surface 322.

The second welded portion 30 is a portion where the connecting element 32 of the first battery cell 10a and the connecting element 32 of the second battery cell 10b are welded to form a weld mark, and the two connecting elements 32 are fixed by the second welded portion 30. The second welded portion 30 surrounds the connecting element 32.

A ratio of the perimeter of the butting surface 322 of the connecting element 32 to the perimeter of an outer surface 310 of the end cover 31 is set within a reasonable range, and therefore, the perimeter of the butting surface 322 of the connecting element 32 is long, thereby increasing the perimeter of the second welded portion 30, enhancing the bonding strength between the connecting element 32 of the first battery cell 10a and the connecting element 32 of the second battery cell 10b, and improving the stability of the electrical connection between the first battery cell 10a and the second battery cell 10b.

In the embodiment where the end cover assembly 3 includes the first insulating member 35, in the thickness direction Z of the end cover 31, a sum of the thickness of a part of the connecting element 32 of the first battery cell 10a protruding outside the first insulating member 35 and the thickness of a part of the connecting element 32 of the second battery cell 10b protruding outside the first insulating member 35 is H₄, and the width of the second welded portion 30 is H₅, which meet 0.25≤H₅/H₄≤1.

H₅/H₄ may be any numerical value between 0.25 and 1, such as 0.25, 0.3, 0.4, 0.4, 0.5, 0.6, 0.7, 0.8, 0.9, and 1.

Setting H₅/H₄ within a reasonable range is capable of ensuring a large weld width after the connecting element 32 of the first battery cell 10a and the connecting element 32 of the second battery cell 10b are welded, thereby further increasing the bonding strength between the connecting element 32 of the first battery cell 10a and the connecting element 32 of the second battery cell 10b.

An embodiment of the present application further provides an electrical device, including the battery 100 according to any one of the above embodiments.

In addition, as shown in Fig. 4 and Fig. 5, an embodiment of the present application further provides an end cover assembly 3, including an end cover 31, a connecting element 32, an electrode terminal 33, a first insulating member 35, and a second insulating member 36. The connecting element 32, the end cover 31, the first insulating member 35, and the second insulating member 36 are stacked in sequence. The end cover 31 is configured to close an opening of a shell 1 of a battery cell 10, and the end cover 31 is provided with a terminal lead-out hole 311. The electrode terminal 33 includes a terminal body 331 and a position-limiting portion 332, the terminal body 331 passes through the terminal lead-out hole 311, the connecting element 32 is connected to the terminal body 331, and the position-limiting portion 332 is connected to one end of the terminal body 331 away from the connecting element 32. The position-limiting portion 332 cooperates with the connecting element 32 to limit the first insulating member 35, the end cover 31, and the second insulating member 36. The projections of the end cover 31 and the connecting element 32 in the thickness direction Z of the end cover 31 are both rectangular, a length direction of the end cover 31 is consistent with a length direction of the connecting element 32, and a width direction of the end cover 31 is consistent with a width direction of the connecting element 32. A projection of an edge of the connecting element 32 in the thickness direction Z of the end cover 31 is completely located on the end cover 31. In the thickness direction of the end cover 31, the perimeter of an outer surface 310 of the end cover 31 is L₁, the connecting element 32 has a butting surface 322 away from the end cover 31, the perimeter of the butting surface 322 is L₂, the butting surface 322 is configured to be electrically connected to an external component, which meet: L_{2/}L₁≥0.25.

It should be noted that, without conflict, embodiments in the present application and features in the embodiments may be combined together.

The above embodiments are only used for illustrating the technical solutions of the present application, and are not intended to limit the present application. For those skilled in the art, the present application may have various modifications and changes. Any modifications, equivalent substitutions, improvements, etc. made within the spirit and principles of the present application shall fall into the scope of protection of the present application.

## Claims

1. An end cover assembly , comprising:
an end cover configured to close an opening of a shell of a battery cell, wherein the end cover is provided with a terminal lead-out hole;
a connecting element arranged on a side of the end cover away from the shell in a thickness direction; and
an electrode terminal passing through the terminal lead-out hole and connected to the connecting element, wherein the electrode terminal is configured to connect an electrode assembly of the battery cell to achieve an electrical connection between the connecting element and the electrode assembly,
wherein in the thickness direction of the end cover, the perimeter of an outer surface of the end cover is L₁, the connecting element has a butting surface away from the end cover, the perimeter of the butting surface is L₂, and the butting surface is configured to be electrically connected to an external component, which meet: L₂/L₁≥0.25.

2. The end cover assembly according to claim 1, wherein 0.5≤L₂/L₁≤1.

3. The end cover assembly according to claim 1 or 2, wherein 0.5≤L₂/L₁≤0.7.

4. The end cover assembly according to any one of claims 1 to 3, wherein the electrode terminal is welded to the connecting element, and a first welded portion is formed at a welding position of the electrode terminal and the connecting element, and the first welded portion does not extend beyond the butting surface.

5. The end cover assembly according to any one of claims 1 to 4, wherein the connecting element is provided with a through hole, and the electrode terminal passes through the through hole; and
in the thickness direction of the end cover, the through hole penetrates the butting surface, the electrode terminal has a first end face, the first end face and the butting surface are located on a same side of the end cover, and the first end face is closer to the end cover than the butting surface.

6. The end cover assembly according to claim 5, wherein in a direction of the connecting element pointing to the end cover, the through hole comprises a first hole section and a second hole section arranged in sequence, the aperture of the first hole section is larger than the aperture of the second hole section, the first hole section penetrates the butting surface, and an inner circumferential surface of the first hole section is connected to an inner circumferential surface of the second hole section through a first connecting surface;
wherein the first end face is flush with the first connecting surface; or in the thickness direction of the end cover, the first end face is closer to the end cover than the first connecting surface.

7. The end cover assembly according to claim 5 or 6, wherein in the thickness direction of the end cover, the thickness of the connecting element is L₃, and a distance between the first end face and the butting surface is L₄, which meet 0.1≤L₄/L₃≤0.2.

8. The end cover assembly according to any one of claims 1 to 7, wherein the end cover assembly further comprises:
a first insulating member, wherein in the thickness direction of the end cover, the first insulating member is at least partially located between the connecting element and the end cover to insulate and isolate the connecting element and the end cover.

9. The end cover assembly according to claim 8, wherein the first insulating member is a flat plate structure arranged between the connecting element and the end cover.

10. The end cover assembly according to claim 8, wherein the first insulating member comprises:
a body part, wherein the body part is located between the connecting element and the end cover in the thickness direction of the end cover; and
an edge part surrounding an edge of the body part, wherein the edge part and the body part jointly define an accommodating space;
wherein the connecting element is partially accommodated in the accommodating space.

11. The end cover assembly according to any one of claims 8 to 10, wherein in the thickness direction of the end cover, the thickness of a part of the connecting element protruding outside the first insulating member is H₁, the thickness of the first insulating member is H₂, and the thickness of the end cover is H₃, which meet 1≤H₁/H₂≤5 and/or 1≤H₁/H₃≤3.

12. The end cover assembly according to any one of claims 1 to 11, wherein the butting surface is a plane.

13. The end cover assembly according to any one of claims 1 to 12, wherein a projection of an edge of the connecting element in the thickness direction of the end cover is completely located on the end cover.

14. The end cover assembly according to any one of claims 1 to 13, wherein projections of the connecting element and the end cover in the thickness direction of the end cover are both rectangular, a length direction of the connecting element is consistent with a length direction of the end cover, and a width direction of the connecting element is consistent with a width direction of the end cover.

15. A battery cell, comprising:
a shell having an opening;
an electrode assembly accommodated in the shell; and
the end cover assembly according to any one of claims 1 to 14, wherein the end cover closes the opening, and the electrode terminal is electrically connected to the electrode assembly.

16. A battery, comprising a plurality of the battery cells according to claim 15.

17. The battery according to claim 16, wherein the plurality of battery cells comprise a first battery cell and a second battery cell, and in the thickness direction of the end cover, the butting surface of the first battery cell and the butting surface of the second battery cell abut against and are connected to each other to achieve an electrical connection between the first battery cell and the second battery cell.

18. The battery according to claim 17, wherein the connecting element of the first battery cell is welded to the connecting element of the second battery cell, a second welded portion is formed at a welding position, and the second welded portion extends along an edge of the butting surface.

19. The battery according to claim 18, wherein the end cover assembly further comprises a first insulating member, and in the thickness direction of the end cover, the first insulating member is at least partially located between the connecting element and the end cover to insulate and isolate the connecting element and the end cover; and
in the thickness direction of the end cover, a sum of the thickness of a part of the connecting element of the first battery cell protruding outside the first insulating member and the thickness of a part of the connecting element of the second battery cell protruding outside the first insulating member is H₄, and the width of the second welded portion is H₅, which meet 0.25≤H₅/H₄≤1.

20. An electrical device, comprising the battery according to any one of claims 16 to 19.
